# EUROPEAN PATENT SPECIFICATION

(11) **EP 4 270 424 B1**
(45) Date of publication and mention of the grant of the patent: **03.06.2026**
(21) Application number: 22742825.7
(22) Date of filing: 19.01.2022
(51) Int. Cl.: H01F 7/02, H01F 13/00, G06F 1/16, H04M 1/02

(54) **ELECTRONIC DEVICE COMPRISING ARRAY MAGNET AND METHOD FOR MANUFACTURING ARRAY MAGNET**
ELEKTRONISCHE VORRICHTUNG MIT ARRAY-MAGNET UND VERFAHREN ZUR HERSTELLUNG EINES ARRAY-MAGNETEN
DISPOSITIF ÉLECTRONIQUE COMPRENANT UN AIMANT EN RÉSEAU ET PROCÉDÉ DE FABRICATION D'UN AIMANT EN RÉSEAU

(30) Priority: 20.01.2021 KR 20210008183; 19.03.2021 KR 20210036062
(43) Date of publication of application: 01.11.2023
(73) Proprietor: Samsung Electronics Co., Ltd., Suwon-si, Gyeonggi-do 16677 (KR)
(72) Inventor: CHO, Gyuyeong, Suwon-si Gyeonggi-do 16677 (KR); LIM, Jaedeok, Suwon-si Gyeonggi-do 16677 (KR); PARK, Sangil, Suwon-si Gyeonggi-do 16677 (KR)
(74) Representative: Gulde & Partner
(86) International application number: PCT/KR2022/000980
(87) International publication number: WO 2022/158849

(56) References cited:
- EP-A2- 0 877 397
- CN-A- 111 009 407
- CN-B- 102 856 032
- CN-Y- 201 191 389
- JP-A- 2018 201 018
- US-A1- 2014 211 445
- US-A1- 2019 164 675

## Description

### [Technical Field]

Various embodiments disclosed herein relate to a foldable electronic device including a magnetic force member and a method for manufacturing an magnetic force member.

### [Background Art]

Magnets may be used for various electronic devices such as a speaker, a smartphone, a tablet personal computer, a wearable device, or a home appliance (for example, a refrigerator, a microwave oven, a washing machine, or audio equipment). For example, a foldable electronic device may include magnets to maintain a folded state. Magnets may be inclined to repel magnets having the same polarity (exert a repulsive force) and to move in a stable direction. An array magnet may include a structure in which magnet elements having opposite polarities are arranged.

A magnetic material may be used to make a magnet. No magnetic force line is emitted outwards in a state in which atomic magnets inside the magnetic material are not aligned. Such a state in which no magnetic force line is emitted outwards or only a small amount of magnetic force line is emitted outwards because atomic magnets are not aligned may be referred to as a non-magnetized state. A magnetic field, if applied to a non-magnetized magnetic material, may align the magnetic poles of atomic magnets in a specific direction, thereby making the magnetic material a magnet. Externally applying a magnetic field to a magnetic material so as to align the magnetic poles of atomic magnets may be referred to as magnetizing the magnetic material.

EP 0 877 397 A2 discloses a composite magnet assembly for an insertion device of the Halbach type or hybrid type to be inserted into the linear part of an electron accelerator to generate a sine-curved periodical magnetic field in the air gap between two oppositely facing composite magnet block arrays. Different from a conventional magnet block assembly consisting of a plurality of permanent magnet blocks or alternate assembly of permanent magnet blocks and soft-magnetic pole pieces, the disclosed magnet block assembly is composed of a plurality of oppositely facing composite magnet blocks each formed with a single base magnet block provided with a plurality of slits into which insert magnet pieces or insert pole pieces are inserted so that the dimensional accuracy in the length-wise direction of the magnet block assembly can be greatly decreased to improve the regularity of the periodical magnetic field.

US 2019/164675 A1 describes an apparatus having a fast drop-off in attraction force between magnets. The apparatus includes a first magnet array having a plurality of magnets with different magnetic field orientations fixedly positioned in a first housing. The apparatus also includes an adjacent magnet assembly relative to the first magnet array and provided in a second housing that includes second and third magnet arrays, each having a plurality of magnets with different magnetic field orientations. The apparatus includes an activation mechanism configured to move the adjacent magnet assembly from at least a first relative position to a second relative position. The adjacent magnet assembly in the second relative position has a second magnetic attraction force with the first magnet array that is substantially reduced as compared to a first magnetic attraction force with the first magnet array in the first relative position. The magnet arrays may define a magnetic fastener controlling opening and/or closing of portions of a device.

### [Disclosure of Invention]

### [Technical Problem]

Magnets may be inclined to repel magnets having the same polarity (exert a repulsive force) and to move in a stable direction. Such an inclination of magnets may cause a problem in that, when magnets are arranged, it is difficult to accurately position magnets. There may be another problem in that, even after magnets are arranged, it is difficult to maintain the position of the arranged magnets until the array magnet is held.

Holes may be formed in magnetized magnets, and holding rods may be inserted into the holes, thereby arranging or holding the magnets, or screws or attaching members may be used to arrange or hold the magnets. In such a case, there may be a problem in that the repulsive force from the magnets may rotate the arranged magnet elements or may disarray them. There may be another problem in that a considerable process time is needed to arrange or hold magnets while suppressing the repulsive force therefrom.

Magnetized magnets may be held and arranged by using jigs and attaching members above reinforcement plates. The arranged magnet structures may be stacked in two layers. If the structures are stacked in two layers, there may be a problem in that manufacturing costs are increased because twofold magnets and reinforcement plates are necessary. There may be another problem in that the reinforcement plates and attaching members disposed between magnet elements decrease the magnetic force from the array magnet. There may be another problem in that, since there is no structure for holding the array magnet other than the attaching member, elements of the array magnet may be disarrayed by the repulsive force between magnets and external impacts.

Various embodiments disclosed herein may provide a method for manufacturing an array magnet and an electronic device including the array magnet, wherein the repulsive force occurring between array magnet elements is minimized, thereby simplifying the array magnet manufacturing process.

### [Solution to Problem]

A method for manufacturing a magnetic force member for a foldable electronic device according to claim 1 includes processing a case including a recessed groove, inserting a first magnet, a second magnet, and a third magnet which is in a non-magnetization state into the recessed groove in an array such that the first magnet is disposed such that the magnetic force of the first magnet is oriented in a first direction, the second magnet is disposed such that the magnetic force of the second magnet is oriented in a second direction different from the first direction, and the third magnet is disposed between the first magnet and the second magnet, coupling the case and a cover so that the inserted magnets are surrounded and fixed by the case and the cover, and magnetizing the third magnet so that the magnetic force of the third magnet is formed in a third direction different from the first direction and the second direction.

A magnetic force member according to various embodiments disclosed in the present document may include a first magnet, a second magnet, a third magnet disposed between the first magnet and the second magnet, a case including a recessed groove, and a cover coupled to the case, wherein the magnetic force member may be manufactured by processing the case, inserting the first magnet, the second magnet, and the third magnet in a non-magnetization state into the recessed groove in an array such that the first magnet is disposed such that the magnetic force of the first magnet is oriented in a first direction, the second magnet is disposed such that the magnetic force of the second magnet is oriented in a second direction different from the first direction, and the third magnet is disposed between the first magnet and the second magnet, coupling the case and the cover so that the inserted magnets are surrounded and fixed by the case and the cover, and magnetizing the third magnet so that the magnetic force of the third magnet is formed in a third direction different from the first direction and the second direction.

A foldable electronic device according to claim 10 includes a hinge structure, a first housing connected to the hinge structure, a second housing connected to the hinge structure and configured to rotate around the hinge structure so as to face one surface of the first housing, and a magnetic force member disposed in at least one of the first housing or the second housing, wherein the magnetic force member may include a first magnet disposed such that the magnetic force thereof is oriented in a first direction, a second magnet disposed such that the magnetic force thereof is oriented in a second direction different from the first direction, a third magnet, of which the magnetic force is oriented in a third direction different from the first direction and the second direction, and which is disposed between the first magnet and the second magnet, a case including a recessed groove, and a cover coupled to the case, and the magnets may be accommodated in the recessed groove, and surrounded and fixed by the case and the cover, wherein the magnetic force member further comprises a fourth magnet disposed such that the magnetic force of the fourth magnet is oriented in a fourth direction perpendicular to the first direction and perpendicular to the third direction, wherein the second direction is oriented in a direction opposite to the first direction, and the third direction is oriented in a direction perpendicular to the first direction, and wherein the second magnet is disposed between the third magnet and the fourth magnet.

### [Advantageous Effects of Invention]

Based on the above discussion, according to an embodiment of the disclosure, a method for manufacturing an array magnet may include a process of arranging and holding a magnetized magnet and a non-magnetized magnet, and then a process of partially magnetizing the non-magnetized magnet. Accordingly, the repulsive force occurring between array magnet elements during array magnet manufacturing may be minimized, thereby simplifying the array magnet manufacturing process.

Furthermore, according to an embodiment of the disclosure, a case and a cover are used to hold one array magnet, thereby reducing material costs necessary during the manufacturing process. In addition, an array magnet according to embodiment of the disclosure has magnet elements disposed adjacent to each other, thereby providing a strong magnetic force. In addition, according to an embodiment of the disclosure, an array magnet may be constrained by a case and a cover such that the array of the array magnet is maintained in spite of the repulsive force between magnet elements and external impacts.

Furthermore, according to an embodiment of the disclosure, a 3D multipolar array magnet may be applied to various electronic devices such that the electronic devices secure strong attachment through the strong magnetic force from the array magnet. In addition, an array magnet according to an embodiment of the disclosure may reduce the range of unwanted magnetic forces. In addition, the array magnet may generate a strong magnetic force only in a desired range, thereby minimizing the interference of the magnetic field exerted on a peripheral device driven based on a magnetic field, such as a touchscreen, a camera, a motor, or a smart pen. In addition, the array magnet may minimize the externally generated magnetic field, thereby reducing the amount of foreign materials (for example, iron powder) smeared on the electronic device.

Advantageous effects obtainable from the disclosure are not limited to the above-mentioned advantageous effects, and other advantageous effects not mentioned herein will be clearly understood from the following description by those skilled in the art to which the disclosure pertains.

### [Brief Description of Drawings]

FIG. 1 is a view showing an unfolded state of an electronic device according to an embodiment.
FIG. 2 is a view showing a folded state of an electronic device according to an embodiment.
FIG. 3 is an exploded perspective view of an electronic device according to an embodiment.
FIG. 4 is a cross-sectional view showing the configuration of a magnetic force member according to an embodiment.
FIG. 5 is a flowchart illustrating a method for manufacturing a magnetic force member according to an embodiment.
FIG. 6 is a perspective view showing a process of processing a case according to an embodiment.
FIG. 7 is a perspective view showing a process of arranging and inserting a magnet according to an embodiment.
FIG. 8 is a perspective view showing a process of coupling a case and a cover according to an embodiment.
FIG. 9 is a cross-sectional view showing a section magnetization process according to an embodiment.
FIG. 10 is a cross-sectional view showing a section magnetization process according to another embodiment.
FIG. 11 is a cross-sectional view showing a magnetic force member and the magnetic field of the magnetic force member according to an embodiment.
FIG. 12 is a perspective view showing a magnetic force member according to an embodiment.
FIG. 13 is a perspective view and a cross-sectional view showing a magnetic force member which may be manufactured according to an embodiment of a manufacturing method according to the invention.
FIG. 14 is a cross-sectional view showing a magnetic force member which may be manufactured according to an embodiment of a manufacturing method according to the invention.

### [Mode for Carrying out the Invention]

Hereinafter, various embodiments of the disclosure will be described with reference to the accompanying drawings. However, it should be appreciated that they are not intended to limit the disclosure to particular embodiments, and the disclosure should be construed to cover various modifications, and/or alternatives of the embodiments of the disclosure. With regard to the description of the drawings, similar reference numerals may be used to designate similar or relevant elements.

An electronic device according to various embodiments of the disclosure may include at least one of, for example, a smartphone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MPEG-1 audio layer-3 (MP3) player, a mobile medical device, a camera, and a wearable device. The wearable device may include at least one of an accessory type (e.g., watch, ring, bracelet, anklet, necklace, glasses, contact lens, or head-mounted device (HMD)), a fabric or clothing-integrated type (e.g., electronic clothing), a body-mounted type (e.g., skin pad, or tattoo), and a bio-implantable type (e.g., implantable circuit).

In some embodiments, the electronic device may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box (e.g., Samsung HomeSyncTM, Apple TVTM, or Google TVTM), a game console (e.g., XboxTM and PlayStationTM), an electronic dictionary, an electronic key, a camcorder, and an electronic photo frame.

In other embodiments, the electronic device may include at least one of various medical devices (e.g., various portable medical measuring devices (blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global positioning system (GPS) receiver, an event data recorder (EDR), a flight data recorder (FDR), a vehicle infotainment device, electronic equipment for a ship (e.g., ship navigation device, gyro-compass, etc.), avionics, a security device, an automobile head unit, a home or industrial robot, an automatic teller's machine (ATM) in banks, point of sales (POS) in a shop, or Internet of things devices (e.g., light bulb, various sensors, electric or gas meter, sprinkler device, fire alarm, thermostat, streetlamp, toaster, sporting goods, hot water tank, heater, boiler, etc.).

According to some embodiments, the electronic device may include at least one of a part of furniture or a building/structure, an electronic board, an electronic signature receiving device, a projector, and various kinds of measuring instruments (e.g., water meter, electric meter, gas meter, radio wave meter, etc.). In various embodiments, the electronic device may be a combination of one or more of the aforementioned various devices. According to some embodiments, the electronic device may be a flexible electronic device. Further, the electronic device according to an embodiment of the disclosure is not limited to the aforementioned devices, and may include a new electronic device according to the development of technology.

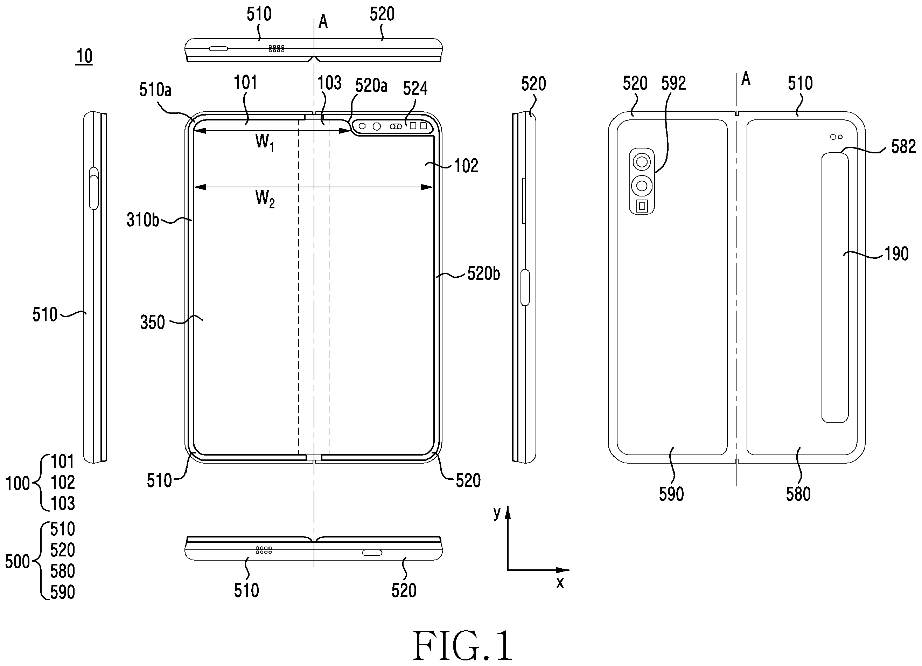

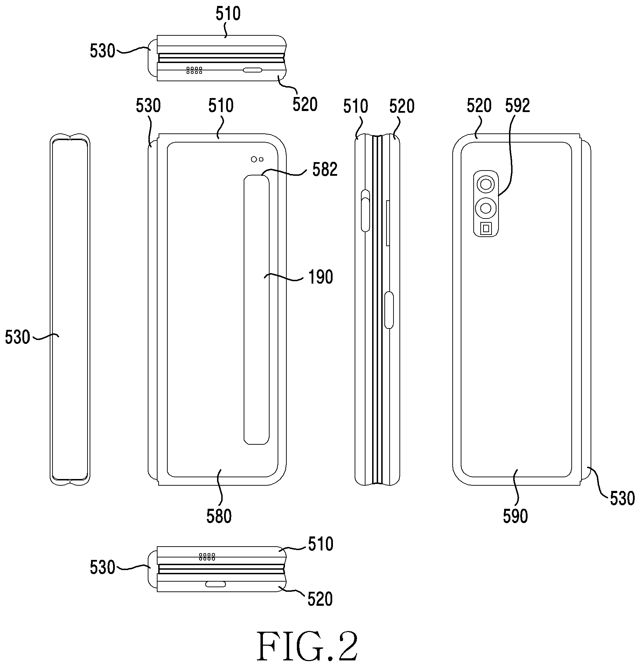

Referring to FIG. 1 and FIG. 2, in an embodiment, an electronic device 10 includes a foldable housing 500, a hinge cover 530 for covering a foldable portion of the foldable housing, and a flexible or foldable display 100 (hereinafter, abbreviated as a "display" 100) disposed in a space formed by the foldable housing 500. In the present document, a surface, on which the display 100 is disposed, may be defined as a first surface or the front surface of the electronic device 10. In addition, a surface opposite to the front surface may be defined as a second surface or the rear surface of the electronic device 10. In addition, surfaces for surrounding the space between the front surface and the rear surface may be defined as a third surface or the side surfaces of the electronic device 10.

In an embodiment, the foldable housing 500 includes a first housing structure 510, a second housing structure 520 including a sensor area 524, a first rear cover 580, and a second rear cover 590. The folding housing 500 of the electronic device 10 is not limited to the shape and the combination illustrated in FIGS. 1 and 2, and may be implemented by other shapes or a combination and/or coupling of components. For example, in another embodiment, the first housing structure 510 and the first rear cover 580 may be integrally formed, and the second housing structure 520 and the second rear cover 590 may be integrally formed.

In the illustrated embodiment, the first housing structure 510 and the second housing structure 520 may be arranged at both sides around a folding axis (the axis A), and may have a generally symmetrical shape with respect to the folding axis A. As described below, the angle formed by the first housing structure 510 and the second housing structure 520 and the distance between the first housing structure and the second housing structure may be changed according to whether the electronic device 10 is in an unfolded state, a folded state, or an intermediate state. In the illustrated embodiment, differently from the first housing structure 510, the second housing structure 520 may additionally include the sensor area 524 in which various sensors are arranged. However, the first housing structure and the second housing structure may have a mutually symmetrical shape in other areas.

In an embodiment, as illustrated in FIG. 1, the first housing structure 510 and the second housing structure 520 may together form a recess for accommodating the display 100. In the illustrated embodiment, due to the sensor area 524, the recess may have two or more different widths in a direction perpendicular to the folding axis A.

For example, the recess may have (1) a first width w1 between a first portion 510a parallel to the folding axis A of the first housing structure 510 and a first portion 520a formed on the periphery of the sensor area 524 of the second housing structure 520, and (2) a second width w2 formed by a second portion 510b of the first housing structure 510 and a second portion 520b of the second housing structure 520, which does not belong to the sensor area 524 and is parallel to the folding axis A. In this case, the second width w2 may be formed to be longer than the first width w1. In other words, the first portion 510a of the first housing structure 510 and the first portion 520a of the second housing structure 520, which have a mutually asymmetrical shape, may form the first width w1 of the recess, and the second portion 510b of the first housing structure 510 and the second portion 520b of the second housing structure 520, which have a mutually symmetrical shapes, may form the second width w2 of the recess. In an embodiment, the first portion 520a and the second portion 520b of the second housing structure 520 may have different distances from the folding axis A. The width of the recess is not limited to the illustrated example. In various embodiments, the recess may have multiple widths by the shape of the sensor area 524 or the portion in which the first housing structure 510 and the second housing structure 520 have an asymmetric shape.

In an embodiment, at least a part of the first housing structure 510 and the second housing structure 520 may be formed of a metal material or a non-metal material having rigidity of a degree selected to support the display 100.

In an embodiment, the sensor area 524 may be formed to be adjacent to a corner of the second housing structure 520 and to have a predetermined area. However, the arrangement, shape, and size of the sensor area 524 are not limited to the illustrated example. For example, in another embodiment, the sensor area 524 may be provided in other corners of the second housing structure 520 or any area between the top corner and the bottom corner thereof. In an embodiment, components for performing various functions, which are embedded in the electronic device 10, may be exposed on the front surface of the electronic device 10 through the sensor area 524 or through one or more openings provided through the sensor area 524. In various embodiments, the components may include various types of sensors. For example, the sensors may include at least one of a front camera, a receiver, or a proximity sensor.

The first rear cover 580 may be disposed at one side of the folding axis on the rear surface of the electronic device, and, for example, may have a substantially rectangular periphery, and the periphery may be surrounded by the first housing structure 510. Similarly thereto, the second rear cover 590 may be disposed at the other side of the folding axis on the rear surface of the electronic device, and the periphery thereof may be surrounded by the second housing structure 520.

In the illustrated embodiment, the first rear cover 580 and the second rear cover 590 may have a substantially symmetrical shape with reference to the folding axis (the axis A). However, the first rear cover 580 and the second rear cover 590 may not necessarily have a mutually symmetrical shape, and in another embodiment, the electronic device 10 may include the first rear cover 580 and the second rear cover 590 having various shapes. In another embodiment, the first rear cover 580 may be integrally formed with the first housing structure 510, and the second rear cover 590 may be integrally formed with the second housing structure 520.

In an embodiment, the first rear cover 580, the second rear cover 590, the first housing structure 510, and the second housing structure 520 may form a space in which various components (e.g., a printed circuit board or a battery) of the electronic device 10 can be arranged. In an embodiment, one or more components may be arranged or may be visually exposed on the rear surface of the electronic device 10. For example, at least a part of a sub-display 190 may be visually exposed through a first rear area 582 of the first rear cover 580. In another embodiment, one or more components or sensors may be visually exposed through a second rear area 592 of the second rear cover 590. In various embodiments the sensor may include a proximity sensor and/or a rear camera.

Referring to FIG. 2, the hinge cover 530 may be disposed between the first housing structure 510 and the second housing structure 520, and may be configured to cover an internal component (for example, a hinge structure). In an embodiment, the hinge cover 530 may be covered by a part of the first housing structure 510 and the second housing structure 520 or may be exposed to the outside, according to a state (e.g., an unfolded state (a flat state) or a folded state) of the electronic device 10.

As an example, as illustrated in FIG. 1, in case that the electronic device 10 is in an unfolded state, hinge cover 530 may be covered by the first housing structure 510 and the second housing structure 520, and thus may not be exposed. As an example, as illustrated in FIG. 2, in case that the electronic device 10 is in a folded state (e.g., a fully folded state), the hinge cover 530 may be exposed to the outside, between the first housing structure 510 and the second housing structure 520. As an example, in case that the first housing structure 510 and the second housing structure 520 are in an intermediate state folded with a certain angle, the hinge structure may be partially exposed to the outside, between the first housing structure 510 and the second housing structure 520. However, in this case, the exposed area may be smaller than that of the fully folded state. In an embodiment, the hinge cover 530 may include a curved surface.

The display 100 may be disposed in a space formed by the foldable housing 500. For example, the display 100 may be seated in a recess formed by the foldable housing 500, and may constitute most of the front surface of the electronic device 10.

Accordingly, the front surface of the electronic device 10 may include the display 100, and a partial area of the first housing structure 510 and a partial area of the second housing structure 520, which are adjacent to the display 100. In addition, the rear surface of the electronic device 10 may include the first rear cover 580, a partial area of the first housing structure 510, which is adj acent to the first rear cover 580, a second rear cover 590, and a partial area of the second housing structure 520, which are adjacent to the second rear cover 590.

The display 100 may refer to a display of which at least a partial area is transformable into a flat surface or a curved surface. In an embodiment, the display 100 may include a folding area 103, a first area 101 disposed at one side (e.g., the left side of the folding area 103 illustrated in FIG. 1) with reference to the folding area 103, and a second area 102 disposed at the other side (e.g., the right side of the folding area 103 illustrated in FIG. 1) with reference thereto.

The division of an area of the display 100, which is illustrated in FIG. 1, may be exemplary, and the area of the display 100 may also be divided into multiple (e.g., four or more, or two) areas according to a structure or a function thereof. As an example, in the embodiment illustrated in FIG. 1, the area of the display 100 may be divided by the folding axis (the axis A) or the folding area 103 extending parallel to the y-axis. However, in another embodiment, the area of the display 100 may also be divided with reference to another folding area (e.g., a folding area parallel to the x-axis) or another folding axis (e.g., a folding axis parallel to the x-axis).

The first area 101 and the second area 102 may have an overall symmetrical shape around the folding area 103. However, differently from the first area 101, the second area 102 may include a notch which is cut according to the presence of the sensor area 524, but in an area other than the sensor area, may have a symmetrical shape with the first area 101. In other words, the first area 101 and the second area 102 may include portions having shape symmetric to each other and portions having shapes asymmetric to each other.

Hereinafter, the operation of the first housing structure 510 and the second housing structure 520 and each area of the display 100 according to a state (e.g., an unfolded state (a flat state) and a folded state) of the electronic device 10 will be described.

In an embodiment, in case that the electronic device 10 is in an unfolded state (a flat state) (e.g., FIG. 1), the first housing structure 510 and the second housing structure 520 may form an angle of 180 degrees, and may be arranged to be oriented in the same direction. The surface of the first area 101 and the surface of the second area 102 of the display 100 may form 180 degrees to each other, and may be oriented in the same direction (e.g., the front direction of the electronic device). The folding area 103 may form the same plane as the first area 101 and the second area 102.

In an embodiment, in case that the electronic device 10 is in a folded state (e.g., FIG. 2), the first housing structure 510 and the second housing structure 520 may be arranged to face each other. The surface of the first area 101 and the surface of the second area 102 of the display 100 may form a small angle (e.g., an angle between 0 degrees and 10 degrees), and thus may face each other. At least a part of the folding area 103 may be formed as a curved surface having a predetermined curvature.

In an embodiment, in case that the electronic device 10 is in an intermediate state (e.g., FIG. 2), the first housing structure 510 and the second housing structure 520 may be arranged with a certain angle. The surface of the first area 101 and the surface of the second area 102 of the display 100 may form an angle larger than that of a folded state and smaller than that of an unfolded state. At least a part of the folding area 103 may be formed as a curved surface having a predetermined curvature, and at this time, the curvature may be smaller than that of a folded state.

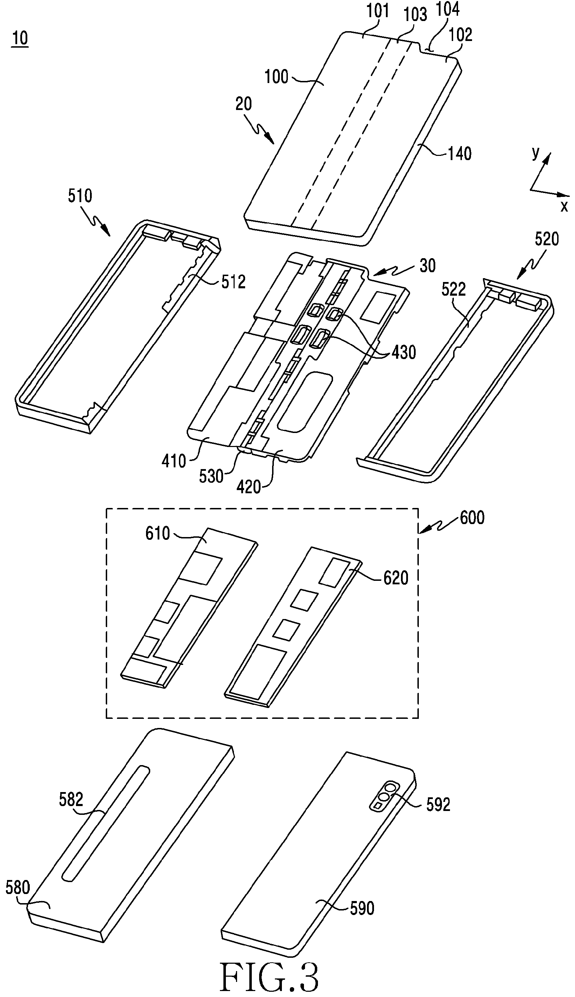

FIG. 3 is an exploded perspective view of an electronic device according to an embodiment.

Referring to FIG. 3, in an embodiment, the electronic device 10 may include a display unit 20, a bracket assembly 30, a substrate part 600, a first housing structure 510, a second housing structure 520, and a first rear cover 580 and a second rear cover 590. In the present document, the display unit 20 may be referred to as a display module or a display assembly.

The display unit 20 may include the display 100 and at least one plate or layer 140 on which the display 100 is seated. In an embodiment, the plate 140 may be disposed between the display 100 and the bracket assembly 30. The display 100 may be disposed on at least a part of one surface (e.g., the upper surface based on FIG. 3) of the plate 140. The plate 140 may be formed in a shape corresponding to the display 100. For example, a partial area of the plate 140 may be formed in a shape corresponding to a notch 104 of the display 100.

The bracket assembly 30 may include a first bracket 410, a second bracket 420, a hinge structure disposed between the first bracket 410 and the second bracket 420, a hinge cover 530 for covering the hinge structure when seen from the outside, and a wire member 430 (e.g., a flexible printed circuit (FPC)) crossing the first bracket 410 and the second bracket 420.

In an embodiment, the bracket assembly 30 may be disposed between the plate 140 and the substrate part 600. As an example, the first bracket 410 may be disposed between the first area 101 of the display 100 and a first substrate 610. The second bracket 420 may be disposed between the second area 102 of the display 100 and a second substrate 620.

In an embodiment, at least a part of the wire member 430 and the hinge structure may be disposed inside the bracket assembly 30. The wire member 430 may be disposed in a direction (e.g., the x-axis direction) crossing the first bracket 410 and the second bracket 420. The wire member 430 may be disposed in a direction (e.g., the x-axis direction) perpendicular to a folding axis (e.g., the y-axis or the folding axis A in FIG. 1) in the folding area 103 of the electronic device 10.

As mentioned above, the substrate part 600 may include the first substrate 610 disposed at the side of the first bracket 410 and the second substrate 620 disposed at the side of the second bracket 420. The first substrate 610 and the second substrate 620 may be arranged inside a space formed by the bracket assembly 30, the first housing structure 510, the second housing structure 520, the first rear cover 580, and the second rear cover 590. Components for implementing various functions of the electronic device 10 may be mounted on the first substrate 610 and the second substrate 620.

The first housing structure 510 and the second housing structure 520 may be assembled to each other while being coupled from both sides of the bracket assembly 30 in a state where the display unit 20 is coupled to the bracket assembly 30. As will be described later, the first housing structure 510 and the second housing structure 520 may be coupled to the bracket assembly 30 while sliding from both sides of the bracket assembly 30.

In an embodiment, the first housing structure 510 may include a first rotation support surface 512, and the second housing structure 520 may include a second rotation support surface 522 corresponding to the first rotation support surface 512. Each of the first rotation support surface 512 and the second rotation support surface 522 may include a curved surface corresponding to a curved surface included in the hinge cover 530.

In an embodiment, in case that the electronic device 10 is in an unfolded state (e.g., the electronic device in FIG. 1), the first rotation support surface 512 and the second rotation support surface 522 may cover the hinge cover 530 so that the hinge cover 530 is not exposed or is minimally exposed to the rear surface of the electronic device 10. Meanwhile, in case that the electronic device 10 is in a folded state (e.g., the electronic device in FIG. 2), the first rotation support surface 512 and the second rotation support surface 522 may rotate along a curved surface included in the hinge cover 530, and thus the hinge cover 530 may be maximally exposed to the rear surface of the electronic device 10.

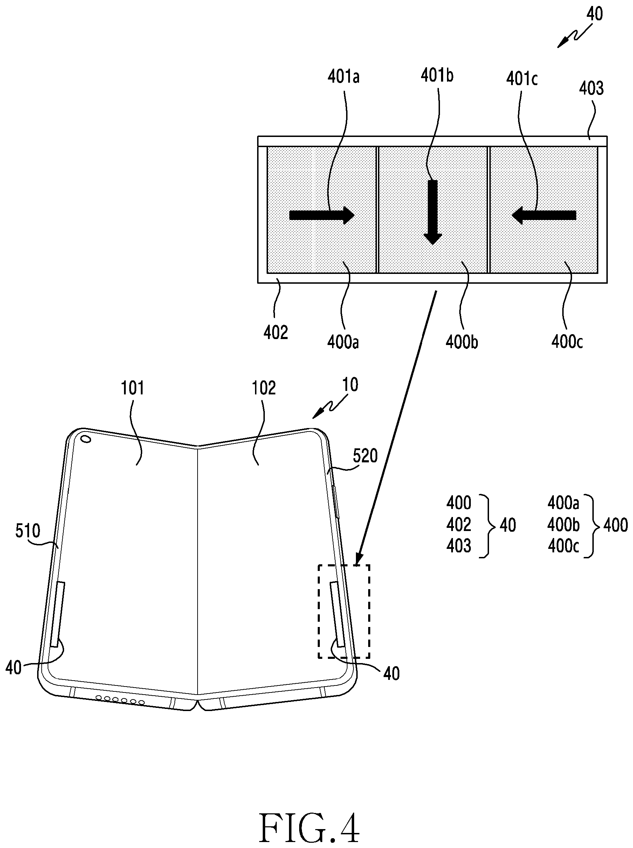

FIG. 4 is a cross-sectional view showing the configuration of a magnetic force member according to an embodiment.

Referring to FIG. 4, the electronic device 10 according to an embodiment includes the first housing structure 510 and the second housing structure 520. According to an embodiment, at least one of the first housing structure 510 and the second housing structure 520 includes a magnetic force member 40. The magnetic force member 40 is disposed in at least one of the first housing structure 510 and the second housing structure 520. According to an embodiment, the magnetic force member 40 may be disposed inside at least one of the first housing structure 510 and the second housing structure 520. The magnetic force member 40 according to an embodiment includes an array magnet 400, a case 402, and a cover 403. The array magnet 400 is formed by at least two magnet elements (e.g., the first magnet 400a, the second magnet 400c, or the third magnet 400b) which are arranged. According to an embodiment, the magnet elements may include a cuboid or a cube shape. However, the shape of the magnet elements is not limited thereto. For example, the magnet elements may include a cylindrical shape (not shown). According to another embodiment, the magnet elements may also include a shape of an n-angle prism (not shown). According to an embodiment, the array magnet 400 includes a first magnet 400a, a third magnet 400b, and a second magnet 400c. However, the configuration of the array magnet 400 is not limited thereto. For example, the array magnet 400 may also further include at least one additional magnet element.

According to an embodiment, one or more magnet elements are arranged such that a direction, in which the magnetic force of a magnet element is oriented, is oriented a direction different from a direction, in which the magnetic forces of other magnet elements are oriented. According to an embodiment, the first magnet 400a is disposed such that the magnetic force thereof is oriented in a first direction 401a. The second magnet 400c is disposed such that the magnetic force thereof is oriented in a second direction 401c. The third magnet 400b is disposed such that the magnetic force thereof is oriented in a third direction 401b. According to an embodiment, the first direction 401a, the second direction 401c, and the third direction 401b may be directions different from each other.

According to an embodiment, the third magnet 400b is disposed between the first magnet 400a and the second magnet 400c. The third magnet 400b may face one surface of the first magnet 400a. The third magnet 400b may face one surface of the second magnet 400c.

According to an embodiment, the case 402 includes a groove (not shown) formed such that one surface of the case is open. According to an embodiment, the groove (not shown) has a shape of a recessed groove 402a. According to an embodiment, the recessed groove 402a accommodates at least a part of the array magnet 400. According to an embodiment, the recessed groove 402a may be formed in a shape capable of accommodating at least a part of the array magnet 400. For example, the recessed groove 402a may include a shape for accommodating at least a part of a cuboid. However, the shape of the recessed groove 402a is not limited thereto. For example, the recessed groove 402a may also include a shape for accommodating at least a part of a cylinder or an n-angle prism (not shown). According to an embodiment, at least a part of the array magnet 400 may be accommodated and fixed in the recessed groove 402a. At least one surface of the accommodated array magnet 400 may face at least one surface of the recessed groove 402a. According to an embodiment, the case 402 may have a shape of a case including five sides. According to an embodiment, the five sides of the array magnet 400 may be surrounded by the case.

According to an embodiment, the cover 403 may include a plate shape. However, the shape of the cover 403 is not limited thereto. For example, the cover 403 may be formed in a shape of a case (not shown) including a recessed groove (not shown). According to an embodiment, the cover 403 may also be the shape of the case 402. For example, the cover 403 may include a groove (not shown) formed such that one surface thereof is open. According to an embodiment, the groove (not shown) may be a shape of a recessed groove (not shown). According to an embodiment, the recessed groove (not shown) may accommodate at least a part of the array magnet 400. According to an embodiment, the recessed groove (not shown) may include a structure capable of accommodating at least a part of the array magnet 400. For example, the recessed groove (not shown) may also include a shape for accommodating at least a part of a cuboid, a cylinder, or an n-angle prism.

According to an embodiment, the cover 403 is coupled to the case 402. According to an embodiment, the array magnet 400 is accommodated in the recessed groove 402a of the case 402 and the recessed groove (not shown) of the cover 403. According to an embodiment, the array magnet 400 is fixed by the case 402 and the cover 403. The array magnet 400 may also be fixed by the recessed groove 402a of the case 402 and the recessed groove (not shown) of the cover 403. According to an embodiment, the cover 403 and the case 402 may seal the array magnet 400. The array magnet 400 is surrounded by the case 402 and the cover 403. The array magnet 400 may be configured such that all surfaces of the array magnet 400 may be surrounded by the case 402 and the cover 403. According to an embodiment, in case that the array magnet 400 is formed in a hexahedral shape, the array magnet 400 may be configured such that the six sides of the array magnet 400 are surrounded by the case 402 and the cover 403. According to an embodiment, the array magnet 400 may be restricted by the case 402 and the cover 403.

According to an embodiment, the cover 403 may be coupled to the case 402 in a state of being not completely cured. The cover 403 may be cured after being coupled to the case 402. Therefore, in a state in which the magnetic force member 40 has been made, the cover 403 and the case 402 may not be distinguished.

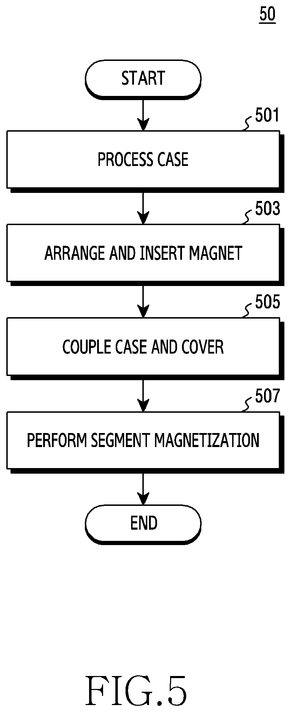

FIG. 5 is a flowchart 50 illustrating a method for manufacturing a magnetic force member according to an embodiment.

Referring to FIG. 5, a manufacturing method of the magnetic force member 40 according to an embodiment includes a case processing process 501, a magnet arrangement and insertion process 503, a case and cover coupling process 505, and a section magnetization process 507. However, the manufacturing method of the magnetic force member 40 is not limited thereto. According to various embodiments, the manufacturing method of the magnetic force member 40 may also further include at least one other process. For example, the manufacturing method of the magnetic force member 40 may also further include an outer shape processing process (not shown).

According to an embodiment, the magnetic force member 40 is manufactured by the manufacturing method. According to an embodiment, the electronic device 10 includes the magnetic force member 40 manufactured by the manufacturing method.

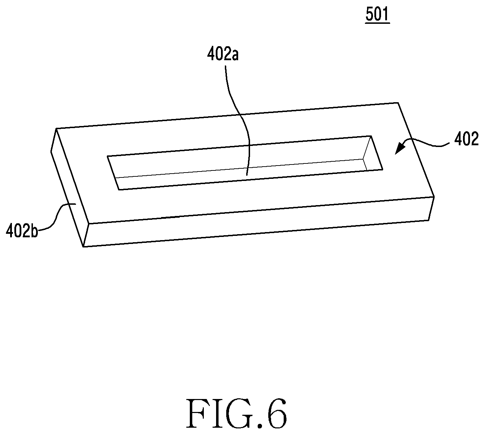

Detailed descriptions of the manufacturing method of the magnetic force member 40 according to an embodiment will be described later in FIGS. 6 to 10.

FIG. 6 is a perspective view showing a process of processing a case according to an embodiment.

Referring to FIG. 6, the case 402 according to an embodiment may include a cuboid shape. According to an embodiment, in process 501, the case 402 is machined to include a groove (not shown). According to an embodiment, the groove (not shown) may be formed such that one surface of the case 402 is open. According to an embodiment, the groove (not shown) may be formed in the shape of the recessed groove 402a. According to an embodiment, the array magnet 400 is inserted into the recessed groove 402a. For example, the recessed groove 402a may be a shape in which at least a part of a cuboid is accommodated. For example, the recessed groove 402a may include five sides. However, the shape of the recessed groove 402a is not limited thereto. According to an embodiment, the recessed groove 402a may be formed in a shape corresponding to the array magnet 400 inserted thereinto. According to an embodiment, a hole (not shown) may also be included in the side surface 402b of the case 402. According to an embodiment, the array magnet 400 may also be inserted into the hole (not shown).

According to an embodiment, the recessed groove 402a may be formed by CNC machining. However, the machining method of the recessed groove 402a is not limited thereto. For example, the recessed groove 402a may also be molded with a mold. According to an embodiment, the recessed groove 402a may also be formed with a casting mold or an injection mold.

According to an embodiment, the case 402 may include a non-magnetic SUS material. However, the case 402 is not limited to the non-magnetic SUS material and may also include a GFRP polymer material.

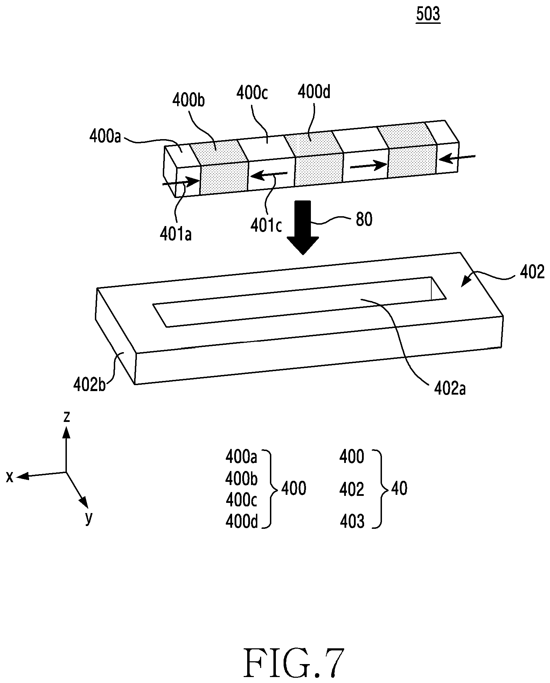

FIG. 7 is a perspective view showing a process of arranging and inserting a magnet according to an embodiment.

Referring to FIG. 7, in process 503, at least three magnet elements are arranged. At least three magnet elements are arranged to form the array magnet 400. According to an embodiment, the array magnet 400 includes the first magnet 400a, the second magnet 400c, the third magnet 400b, and a fourth magnet 400d. However, the configuration of the array magnet 400 is not limited thereto. According to an embodiment, the array magnet 400 may also include one or more magnet elements configured such that a direction, in which the magnetic force of a magnet element is oriented, is oriented a direction different from a direction, in which the magnetic forces of other magnet elements are oriented.

According to an embodiment, the first magnet 400a is disposed such that the magnetic force thereof is oriented in the first direction 401a. According to an embodiment, the second magnet 400c is disposed such that the magnetic force thereof is oriented in the second direction 401c. According to an embodiment, the first direction 401a and the second direction 401c are directions different from each other. According to an embodiment, the third magnet 400b and the fourth magnet 400d may be in a non-magnetization state.

According to an embodiment, a magnet element (e.g., the first magnet 400a or the second magnet 400c) in a magnetization state and a magnet element (e.g., the third magnet 400b or the fourth magnet 400d) in a non-magnetization state may be alternately arranged. According to an embodiment, magnet elements in a non-magnetization state are arranged between magnet elements in a magnetization state. According to an embodiment, magnet elements in a magnetization state are also arranged between magnet elements in a non-magnetization state. According to an embodiment, the first magnet 400a is disposed such that the magnetic force thereof is oriented in the first direction 401a. According to an embodiment, the second magnet 400c is disposed such that the magnetic force thereof is oriented in the second direction 401c different from the first direction 401a. The third magnet 400b in a non-magnetization state is disposed between the first magnet 400a and the second magnet 400c. One surface of the third magnet 400b may face one surface of the first magnet 400a. The third magnet 400b may include the other surface opposite to the one surface of the third magnet 400b. The other surface of the third magnet 400b may face one surface of the second magnet 400c. According to an embodiment, the second magnet 400c may be disposed between the third magnet 400b and the fourth magnet 400d in a non-magnetization state. The second magnet 400c may include one surface facing the other surface of the third magnet 400b, and the other surface opposite to the one surface of the second magnet 400c. One surface of the fourth magnet 400d may face the other surface of the second magnet 400c. According to an embodiment, the fourth magnet 400d may include one surface facing the other surface of the second magnet 400c, and the other surface opposite to the one surface of the fourth magnet 400d. According to an embodiment, at least one magnet element may also face the other surface of the fourth magnet 400d. According to an embodiment, at least one magnet element may also face the other surface of the first magnet 400a. According to an embodiment, the first magnet 400a, the third magnet 400b, the second magnet 400c, and the fourth magnet 400d may also be arranged in one row in the order thereof.

Referring to FIG. 7, in process 503 according to an embodiment, the second magnet 400c is disposed such that the second direction 401c is oriented in a direction opposite to the first direction 401a. According to an embodiment, the first direction 401a and the second direction 401c are also directions opposite to each other.

In process 503 according to an embodiment, the array magnet 400 are inserted into the recessed groove 402a. According to an embodiment, the array magnet 400 may be inserted into the recessed groove 402a in the -z-axis direction 80. However, the insertion method of the array magnet 400 is not limited thereto. For example, in case that a hole (not shown) is formed in the side surface 402b of the case 402, the array magnet 400 may also be inserted into the recessed groove 402a in the x-axis direction or the -x-axis direction. According to an embodiment, the array magnet 400 inserted in the recessed groove 402a or the hole (not shown) are fixed thereto. According to an embodiment, the case 402 may prevent that an element (e.g., the first magnet 400a or the second magnet 400c) of the inserted array magnet 400 rotates or separates from the arrangement thereof due to the property of a magnet trying to move in a stable direction.

According to an embodiment, in process 503, the array magnet 400 is inserted into the recessed groove 402a. However, the configuration thereof is not limited thereto. According to an embodiment, the arrangement process and the insertion process may also be performed simultaneously. For example, at least one magnet element may be inserted into the recessed groove 402a or the hole (not shown), and at least one other magnet element may also be inserted into the recessed groove 402a. According to an embodiment, at least one magnet element inserted in the recessed groove 402a or the hole (not shown) may be fixed thereto. According to an embodiment, the case 402 may prevent that at least one magnet inserted in the recessed groove 402a rotates or separates from the arrangement thereof due to the property of a magnet trying to move in a stable direction.

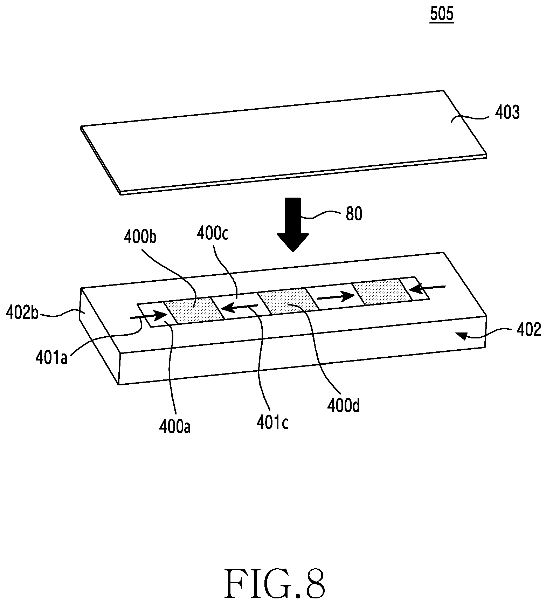

FIG. 8 is a perspective view showing a process of coupling a case and a cover according to an embodiment.

Referring to FIG. 8, in process 505, the cover 403 is coupled to the case 402. According to an embodiment, the cover 403 may be formed in a plate shape. However, it is not limited thereto. Referring to the description of FIG. 4, the cover 403 may also be formed in a shape of a case (not shown) including a recessed groove (not shown).

According to an embodiment, the case 402 may also include a non-magnetic SUS material or a GFRP polymer material. According to an embodiment, the cover 403 may include the same material as the case 402. According to an embodiment, the cover 403 may include a semi-curable material. According to an embodiment, the semi-curable material may be in a solid state before high temperature curing or at room temperature. According to an embodiment, the semi-curable material may also include a non-magnetic SUS material or a GFRP polymer material. However, the material of the cover 403 is not limited thereto. For example, the cover 403 may also include various materials which can be melted or transformed into an adhesive material, at high temperatures.

According to an embodiment, in process 505, the cover 403 may face the case 402. According to an embodiment, the cover 403 may be disposed to be in contact with the case 402. According to an embodiment, in process 505, the cover 403 disposed on the case 402 may be cured in a high-temperature chamber. According to an embodiment, the semi-curable material may be melted so that the cover 403 and the case 402 are coupled to each other. According to an embodiment, the semi-curable material may be melted so that the cover 403 and the case 402 are bonded to each other. According to an embodiment, the cover 403 and the case 402 may also be coupled to form one member. However, the case and cover coupling process 505 is not limited thereto. For example, the case 402 and the cover 403 may also be coupled using a laser.

According to an embodiment, the case 402 and the cover 403 may include a metal material. According to an embodiment, the case 402 may also be a shape of a case having five sides formed by folding a metal material. According to an embodiment, the process 505 may also include a process of coupling the case 402 and the cover 403 including metal materials through welding.

According to an embodiment, the case 402 and the cover 403 may surround the inserted array magnet 400. The case 402 and the cover 403 fix the array magnet 400. The array magnet 400 may be sealed by the case 402 and the cover 403. The case 402 and the cover 403 may prevent that an element of the inserted array magnet 400 rotates or separates from the arrangement thereof due to the property of a magnet trying to move in a stable direction.

According to an embodiment, the method for fixing the array magnet 400 is not limited thereto. According to an embodiment, the case 402 made using a thermosetting material may be manufactured in an unfolded flat shape, the case having the unfolded flat shape may be folded to surround the array magnet 400 and then be cured to fix the array magnet 400 also. According to another embodiment, the array magnet 400 may also be fixed by inserting the array magnet 400 into a shrinkable tube.

According to an embodiment, the thickness of the case 402 may be at least 0.1 mm. According to an embodiment, in order to form the exterior thereof after the case 402 and the cover 403 are coupled to each other, a process (for example, a CNC process) of trimming a part of at least one of the case 402 or the cover 403 may be performed.

According to an embodiment, a magnet element (e.g., the first magnet 400a or the second magnet 400c) inserted in a magnetization state may include a super high temperature (SH) grade magnet. SH grade magnets may maintain the magnetic forces thereof even after having been subjected to a high-temperature curing process. According to an embodiment, since a magnet element (e.g., the third magnet 400b or the fourth magnet 400d) in a non-magnetization state is subject to a high-temperature curing process before the magnetization process, the magnet element may include an N52 grade magnet.

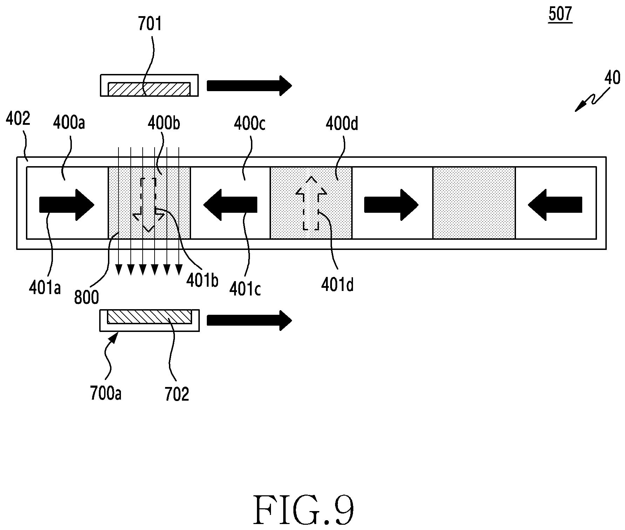

FIG. 9 is a cross-sectional view showing a section magnetization process according to an embodiment.

In process 507 according to an embodiment, a magnet element (e.g., the third magnet 400b or the fourth magnet 400d) in a non-magnetization state is magnetized. The magnetized magnet element is formed to have a magnetic force oriented in one direction. According to an embodiment, in process 507, the third magnet 400b is magnetized such that the third magnet 400b in a non-magnetization state is formed to have a magnetic force oriented in the third direction 401b. According to an embodiment, the third direction 401b is a direction different from the first direction 401a and the second direction 401c. According to an embodiment, in process 507, the fourth magnet 400d is magnetized such that the fourth magnet 400d in a non-magnetization state is formed to have a magnetic force oriented in a fourth direction 401d. According to an embodiment, the fourth direction 401d is a direction different from the first direction 401a, the third direction 401b, and the second direction 401c.

According to an embodiment, the process 507 includes a process of magnetizing the third magnet 400b so that the third magnet 400b in a non-magnetization state is formed to have a magnetic force oriented in the third direction 401b different from the first direction 401a and the second direction 401c. According to an embodiment, the process 507 includes a process of magnetizing the fourth magnet 400d so that the fourth magnet 400d in a non-magnetization state is formed to have a magnetic force oriented in the fourth direction 401d different from the first direction 401a, the third direction 401b, and the second direction 401c.

According to an embodiment, the process of magnetizing the third magnet 400b includes a process of magnetizing the third magnet 400b so that the magnetic force thereof is oriented in the third direction 401b, which is a direction perpendicular to the first direction 401a and the second direction 401c. According to an embodiment, the process of magnetizing the fourth magnet 400d includes a process of magnetizing the fourth magnet 400d so that the magnetic force thereof is oriented in the fourth direction 401d, which is a direction perpendicular to the first direction 401a and the second direction 401c. According to an embodiment, the third direction 401b and the fourth direction 401d are directions opposite to each other.

According to an embodiment, in process 507, a magnet element (e.g., the third magnet 400b or the fourth magnet 400d) in a non-magnetization state may be magnetized using a magnetization yoke. The magnetization yoke may include an N-pole yoke plate 701 and an S-pole yoke plate 702. According to an embodiment, the N-pole yoke plate 701 and the S-pole yoke plate 702 may be arranged to face each other. According to an embodiment, the magnetization yoke may form at least one magnetic field biased in one direction. A magnetic field 800 may be generated to be directed from the N-pole yoke plate 701 toward the S-pole yoke plate 702.

According to an embodiment, in process 507, a magnet element in a non-magnetization state may be disposed between the N-pole yoke plate 701 and the S-pole yoke plate 702. The magnetization yoke may apply the generated magnetic field 800 to the arranged magnets (e.g., the third magnet 400b and the fourth magnet 400d) in a non-magnetization state. The applied magnetic field 800 may cause a magnetic force to be formed in the magnets (e.g., the third magnet 400b and the fourth magnet 400d) in a non-magnetization state. According to an embodiment, according to the arrangement of the magnets in a non-magnetization state, the direction of magnetic forces of the magnets may be adjusted.

Referring to FIG. 9, in process 507 according to an embodiment, magnets (e.g., the third magnet 400b and the fourth magnet 400d) in a non-magnetization state may be magnetized using a single-pole magnetization yoke 700a. The single-pole magnetization yoke 700a may include one N-pole yoke plate 701 and one S-pole yoke plate 702. According to an embodiment, the single-pole magnetization yoke 700a may form one magnetic field 800 biased in one direction. The single-pole magnetization yoke 700a may magnetize one magnet element.

Multiple magnet elements may be sequentially magnetized to have magnetic forces oriented in different directions while the position of the single-pole magnetization yoke 700a is moved with respect to the magnetic force member 40.

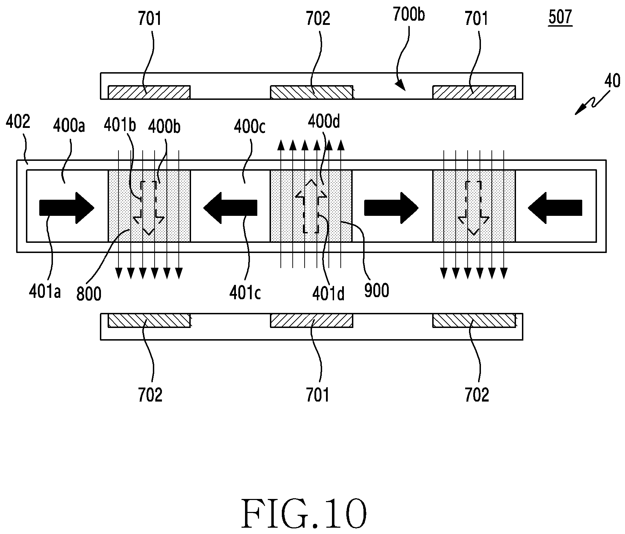

FIG. 10 is a cross-sectional view showing a section magnetization process according to another embodiment.

A section magnetization process and a structure of a magnetization yoke may be referred to by FIG. 9. In connection with elements identical or substantially identical to the foregoing elements, the same reference numerals may be used, and overlapping descriptions thereof will be omitted.

Referring to FIG. 10, in process 507 according to an embodiment, magnets (e.g., the third magnet 400b and the fourth magnet 400d) in a non-magnetization state may be magnetized using a multi-pole magnetization yoke 700b. The multi-pole magnetization yoke 700b may include at least two N-pole yoke plates 701 and at least two S-pole yoke plates 702. According to an embodiment, the multi-pole magnetization yoke 700b may be disposed such that at least two N-pole yoke plates 701 and at least two S-pole yoke plates 702 overlap each other. According to an embodiment, the multi-pole magnetization yoke 700b may form at least two magnetic fields 800 and 900 biased in directions different from each other. However, the form of the multi-pole magnetization yoke 700b illustrated in FIG. 10 may be differently configured according to the direction of a magnetic force formed through segment magnetization.

According to an embodiment, in process 507, at least two magnets (e.g., third magnet 400b and fourth magnet 400d) in a non-magnetization state may be magnetized using the multi-pole magnetization yoke 700b. According to an embodiment, in process 507, by using the multi-pole magnetization yoke 700b, at least two magnet elements in a non-magnetization state may be formed to have magnetic forces oriented in at least two different directions (e.g., the third direction 401b and the fourth direction 401d). According to an embodiment, by using the multi-pole magnetization yoke 700b, the second magnet 400b and the fourth magnet 400d may be simultaneously magnetized.

According to an embodiment, the manufacturing method of the magnetic force member 40 may further include a process (not shown) of processing the outer shape of the magnetic force member 40. According to an embodiment, in the outer shape processing process, the outer shape of the magnetic force member 40, to which the case and the cover are coupled, may be processed. According to an embodiment, in process 507, the magnetic force member 40, of which the outer shape has been processed, may be subjected to segment magnetization. However, it is not limited thereto. For example, in process 507, the outer shape of the magnetic force member 40, which has been subjected to segment magnetization, may also be processed. According to an embodiment, in the magnetic force member 40 having the processed outer shape, the thickness of the case 402 and/or the cover 403 may become thinner, and thus a magnet in a non-magnetization state may be easily magnetized during the section magnetization process 507.

According to an embodiment, in the outer shape processing process (not shown), the outer surface of the case 402 of the magnetic force member 40 may be peeled off. According to an embodiment, in the outer shape processing process, the outer surface of the case 402 of the magnetic force member 40 may also be trimmed. According to an embodiment, in the outer shape processing process, the case 402 may also be processed to have a thin thickness. According to an embodiment, the shape of the case 402 may also be changed. According to an embodiment, in the outer shape processing process, the outer shape of the cover 403 coupled to the case 402 may also be processed. According to an embodiment, the outer surface of the cover 403 may be peeled off. According to an embodiment, the outer surface of the cover 403 may also be trimmed. According to an embodiment, the cover 403 may also be processed to have a thin thickness. According to an embodiment, the shape of the cover 403 may also be changed. However, it is not limited thereto. For example, the outer shape processing process may include a process of processing the outer shape of the magnetic force member 40 to fit the shape of a product to be applied.

According to an embodiment, the case 402 and/or the cover 403 subjected to the outer shape processing process may have a thickness of at least 0.1 mm. According to an embodiment, the case 402 and/or the cover 403 of the completed magnetic force member 40 may have a thickness of at least 0.1 mm. According to an embodiment, the outer shape processing process may be performed using CNC machining.

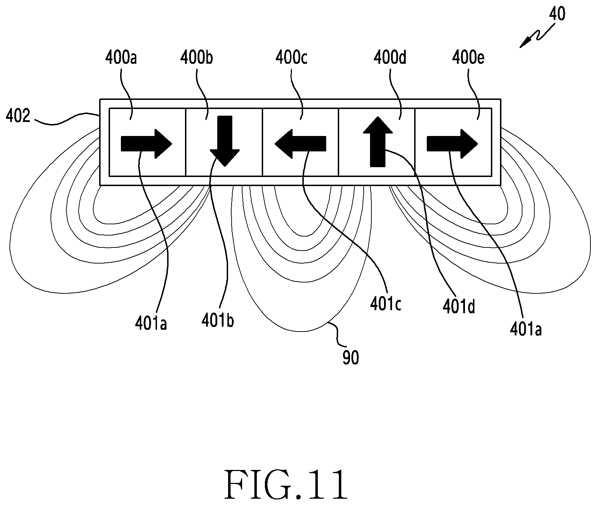

FIG. 11 is a cross-sectional view showing a magnetic field of a magnetic force member according to an embodiment.

According to an embodiment, the magnetic force member 40 may include the array magnet 400. According to an embodiment, the array magnet 400 may include the first magnet 400a, the third magnet 400b, the second magnet 400c, and the fourth magnet 400d. According to an embodiment, the array magnet 400 may further include one or more magnet elements configured such that the magnetic forces thereof are oriented in different directions. For example, the array magnet 400 may also further include a fifth magnet element 400e. According to an embodiment, the first magnet 400a, the third magnet 400b, the second magnet 400c, and the fourth magnet 400d may be arranged such that the magnetic forces thereof are oriented in different directions. According to an embodiment, the first magnet 400a may be disposed such that the magnetic force thereof is oriented in the first direction 401a. According to an embodiment, the second magnet 400c may be disposed such that the magnetic force thereof is oriented in the second direction 401c opposite to the first direction. According to an embodiment, the third magnet 400b may be disposed such that the magnetic force thereof is oriented in the third direction 401b. According to an embodiment, the fourth magnet 400d may be disposed such that the magnetic force thereof is oriented in the fourth direction 401d perpendicular to the first direction 401a and the second direction 401c. According to an embodiment, the fourth direction 401d may be a direction opposite to the third direction 401b. According to an embodiment, the first direction 401a, third direction 401b, the second direction 401c, and fourth direction 401d may be directions different from each other. According to an embodiment, the fifth magnet 400e may be disposed such that the magnetic force thereof is formed in the first direction 401a.

For example, in the section magnetization process 507 in FIG. 5, the magnets 400b and 400d to be subjected to magnetization may be magnetized in a direction in which the magnets are sequentially rotated by a designated angle.

According to an embodiment, the magnet member 40, in which the array magnet 400 is inserted, may generate a magnetic field. According to an embodiment, a magnetic field may be generated from the third direction 401b toward the first direction 401a. A magnetic force line 90 may be formed from the third direction 401b toward the first direction 401a. According to an embodiment, a magnetic field may be generated from the third direction 401b toward the fourth direction 401d. The magnetic force line 90 may be formed from the third direction 401b toward the fourth direction 401d. According to an embodiment, a magnetic field may be generated from the fifth direction 401e toward the fourth direction 401d. The magnetic force line 90 may be formed from the fifth direction 401e toward the fourth direction 401d. Due to this, the strength of a magnetic force of the magnetic force member 40 according to an embodiment may increase.

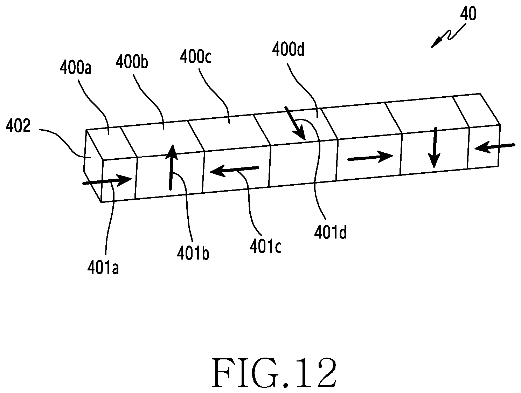

FIG. 12 is a perspective view showing a magnetic force member according to an embodiment.

The configuration and the manufacturing method of the magnetic force member 40 may be referred to by FIGS. 4 to 10. In connection with elements identical or substantially identical to the foregoing elements, the same reference numerals may be used, and overlapping descriptions thereof will be omitted.

Referring to FIG. 12, the magnetic force member 40 according to an embodiment includes the first magnet 400a, the third magnet 400b, the second magnet 400c, and the fourth magnet 400d. According to an embodiment, the first magnet 400a, the third magnet 400b, the second magnet 400c, and the fourth magnet 400d are arranged such that the magnetic forces thereof are oriented in different directions.

According to an embodiment, the first magnet 400a is disposed such that the magnetic force thereof is oriented in the first direction 401a. According to an embodiment, the second magnet 400c is disposed such that the magnetic force thereof is oriented in the second direction 401c opposite to the first direction 401a. According to an embodiment, the third magnet 400b is disposed such that the magnetic force thereof is oriented in the third direction 401b perpendicular to the first direction 401a and the second direction 401c. According to an embodiment, the fourth magnet 400d is disposed such that the magnetic force thereof is oriented in the fourth direction 401d perpendicular to the first direction 401a and the third direction 401b.

According to an embodiment, in the magnet arrangement and insertion process (503 in FIG. 5), the first magnet 400a is disposed such that the magnetic force thereof is oriented in the first direction 401a. According to an embodiment, the second magnet 400c is disposed such that the magnetic force thereof is oriented in the second direction 401c opposite to the first direction 401a. According to an embodiment, the section magnetization process (507 in FIG. 5) includes a process of magnetizing the third magnet 400b so that the third magnet 400b is formed to have a magnetic force oriented in the third direction 401b perpendicular to the first direction 401a and the second direction 401c. The process (507 in FIG. 5) includes a process of magnetizing the fourth magnet 400d so that the fourth magnet 400d is formed to have a magnetic force oriented in the fourth direction 401d perpendicular to the first direction 401a and the third direction 401b.

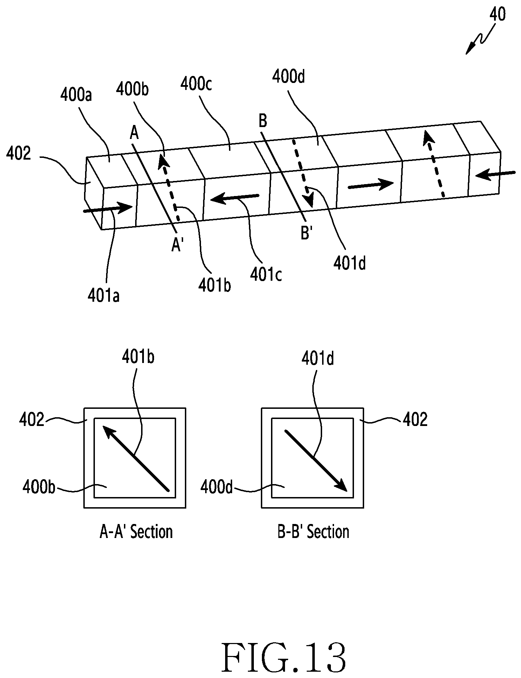

FIG. 13 is a perspective view and a cross-sectional view showing a magnetic force member which may be manufactured according to an embodiment of a manufacturing method according to the invention.

The configuration and the manufacturing method of the magnetic force member 40 may be referred to by FIGS. 4 to 10. In connection with elements identical or substantially identical to the foregoing elements, the same reference numerals may be used, and overlapping descriptions thereof will be omitted.

Referring to FIG. 13, the magnetic force member 40 according to an embodiment may include the first magnet 400a, the third magnet 400b, the second magnet 400c, and the fourth magnet 400d. According to an embodiment, the first magnet 400a, the third magnet 400b, the second magnet 400c, and the fourth magnet 400d may be arranged such that the magnetic forces thereof are oriented in different directions.

According to an embodiment, the first magnet 400a may be disposed such that the magnetic force thereof is oriented in the first direction 401a. According to an embodiment, the second magnet 400c may be disposed such that the magnetic force thereof is oriented in the second direction 401c opposite to the first direction 401a. According to an embodiment, the third magnet 400b may have a magnetic force oriented in the third direction 401b perpendicular to the first direction 401a and the second direction 401c. According to an embodiment, the third direction 401b may be a direction which is perpendicular to the first direction 401a and forms an inclination angle with respect to one surface of the magnetic force member 40. According to an embodiment, the fourth magnet 400d may have a magnetic force oriented in the fourth direction 401b, which is a direction opposite to the third direction 401b.

According to an embodiment, in the magnet arrangement and insertion process (503 in FIG. 5), the first magnet 400a may be disposed such that the magnetic force thereof is oriented in the first direction 401a. According to an embodiment, the second magnet 400c may be disposed such that the magnetic force thereof is oriented in the second direction 401c opposite to the first direction 401a. According to an embodiment, the section magnetization process (507 in FIG. 5) may include a process of magnetizing the third magnet 400b so that the third magnet 400b is formed to have a magnetic force oriented in the third direction 401b, which is perpendicular to the first direction 401a and forms an inclination angle with respect to one surface of the magnetic force member 40. The process (507 in FIG. 5) may include a process of magnetizing the fourth magnet 400d so that the fourth magnet 400d is formed to have a magnetic force oriented in the fourth direction 401d opposite to the third direction 401b.

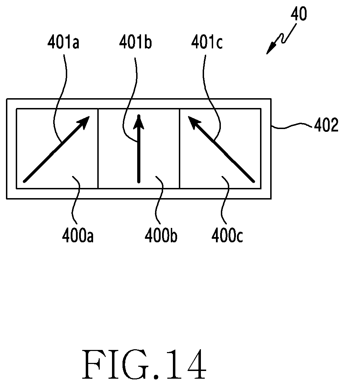

FIG. 14 is a cross-sectional view showing a magnetic force which may be manufactured according to an embodiment of a manufacturing method according to the inventiont.

The configuration and the manufacturing method of the magnetic force member 40 may be referred to by FIGS. 4 to 10. In connection with elements identical or substantially identical to the foregoing elements, the same reference numerals may be used, and overlapping descriptions thereof will be omitted.

Referring to FIG. 14, the magnetic force member 40 according to an embodiment may include the first magnet 400a, the third magnet 400b, and the second magnet 400c. According to an embodiment, the first magnet 400a, the third magnet 400b, and the second magnet 400c may be arranged such that the magnetic forces thereof is oriented in different directions.

According to an embodiment, the first magnet 400a may be disposed such that the magnetic force thereof is oriented in the first direction 401a. According to an embodiment, the second magnet 400c may be disposed such that the magnetic force thereof is oriented in the second direction 401c perpendicular to the first direction 401a. However, it is not limited thereto. For example, the second magnet 400c may also be disposed so that the magnetic force thereof is oriented in the second direction 401c, which is a direction forming an obtuse angle with the first direction 401a. According to another embodiment, the second magnet 400c may also be disposed such that the magnetic force thereof is oriented in the second direction 401c forming an acute angle with the first direction 401a.

According to an embodiment, the third magnet 400b may include a magnetic force oriented in the third direction 401b forming an acute angle with the first direction 401a and the second direction 401c. According to an embodiment, the acute angle formed by the first direction 401a and the third direction 401b may be the same angle as the acute angle formed by the first direction 401a and the second direction 401b.

According to an embodiment, in the magnet arrangement and insertion process (503 in FIG. 5), the first magnet 400a may be disposed such that the magnetic force thereof is oriented in the first direction 401a. According to an embodiment, the second magnet 400c may be disposed such that the magnetic force thereof is oriented in the second direction 401c perpendicular to the first direction 401a. However, it is not limited thereto. For example, the second magnet 400c may also be disposed such that the magnetic force thereof is oriented in the second direction 401c, which is a direction forming an obtuse angle with the first direction 401a. According to an embodiment, the second magnet 400c may also be disposed such that the magnetic force thereof is oriented in the second direction 401c different from the first direction 401a.

According to an embodiment, the section magnetization process (507 in FIG. 5) may include a process of magnetizing the third magnet 400b so that the third magnet 400b is formed to have a magnetic force oriented in the third direction 401b forming an acute angle with the first direction 401a and the second direction 401c. According to an embodiment, a process of magnetizing the third magnet 400b so that the acute angle formed by the first direction 401a and the third direction 401b is formed to be identical to the acute angle formed by the first direction 401a and the second direction 401b may also be included therein.

According to an embodiment, the third magnet 400b may be magnetized such that the third direction 401b forms an acute angle with the first direction 401a and the second direction 401c, and the magnetic force thereof is formed in the first direction 401a, the second direction 401c, and the third direction 401b which are oriented toward the same one surface of the array magnet 400. In this case, the array magnet 400 may have a strong magnetic force applied to a specific range. According to an embodiment, the array magnet 400 may have a strong magnetic force in a direction toward which the third direction 401b is oriented. **In** addition, in this case, in the process of magnetizing the third magnet 400b, the magnetic forces of the first magnet 400a and the second magnet 400c may not be attenuated.

According to an embodiment, the third magnet may also be magnetized such that the third direction 401b forms an acute angle with the first direction 401a and the second direction 401c, and the magnetic force thereof is formed in the third direction 401b directed toward the other surface of the array magnet 400, which is opposite to one surface of the array magnet 400, in which the first direction 401a and the second direction 401c are oriented. **In** this case, the array magnet 400 may have a weak magnetic force. **In** addition, in the process of magnetizing the third magnet 400b, the magnetic forces of the first magnet 400a and the second magnet 400c may also be attenuated. However, the range, in which the magnetic force of the array magnet 400 acts, may be limited.

According to an embodiment, according to the arrangement direction of magnets in a magnetization state and the magnetization direction of magnets in a non-magnetization state, the strength of a magnetic force of the array magnet 400 and the range, in which the magnetic force acts, may be adjusted.

Various embodiments of the disclosure disclosed in the specification and the drawings are merely specific examples presented to easily describe the technical content of the disclosure and to help understanding of the disclosure, and are not intended to limit the scope of the disclosure. Accordingly, it should be interpreted that not only embodiments disclosed herein but also all changed or modified forms derived based on the technical idea of the disclosure are included in the scope of the disclosure.

As described above, a method for manufacturing a magnetic force member (e.g., the magnetic force member 40 in FIG. 4) according to an embodiment may include processing a case including a recessed groove, inserting a first magnet, a second magnet, and a third magnet in a non-magnetization state into the recessed groove in an array such that the first magnet is disposed such that the magnetic force of the first magnet is oriented in a first direction, the second magnet is disposed such that the magnetic force of the second magnet is oriented in a second direction different from the first direction, and the third magnet is disposed between the first magnet and the second magnet, coupling the case and a cover so that the inserted magnets are surrounded and fixed by the case and the cover, and magnetizing the third magnet so that the magnetic force of the third magnet is formed in a third direction different from the first direction and the second direction.

According to an embodiment, the inserting of the magnets into the recessed groove in the array may include arranging the second magnet so that the second direction is oriented in a direction opposite to the first direction, and the magnetizing of the third magnet may include magnetizing the third magnet so that the magnetic force thereof is formed in the third direction, which is a direction perpendicular to the first direction and the second direction.

According to an embodiment, the inserting of the magnets into the recessed groove may include arranging a fourth magnet in a non-magnetization state so that the fourth magnet faces the second magnet, and the second magnet is disposed between the third magnet and the fourth magnet, and the magnetizing may include magnetizing the fourth magnet so that the magnetic force of the fourth magnet is formed in a fourth direction different from the first direction, the second direction, and the third direction.

According to an embodiment, the first direction and the second direction may be opposite to each other, and in the magnetizing of the third magnet and the fourth magnet, the third magnet and the fourth magnet may be magnetized such that the magnetic forces thereof are formed in the third direction and the fourth direction, respectively, which are directions perpendicular to the first direction.

According to an embodiment, the third direction and the fourth direction may be opposite to each other.

According to an embodiment, in the magnetizing of the third magnet and the fourth magnet, the third magnet and the fourth magnet may be magnetized such that the magnetic force of the fourth magnet is formed in the fourth direction, which is a direction perpendicular to the first direction and the third direction.

According to an embodiment, in the manufacturing method of the magnetic force member, the third magnet and the fourth magnet may be simultaneously magnetized using a multi-pole magnetization yoke configured to have at least two magnetic forces biased in directions different from each other.

According to an embodiment, the manufacturing method of the magnetic force member may further include processing the outer shape of the magnetic force member to which the case and the cover are coupled.

According to an embodiment, the manufacturing method of the magnetic force member may further include processing the outer shape of the magnetic force member to which the case and the cover are coupled.

According to an embodiment, the cover may include a semi-curable material, and in the coupling of the case and the cover, the cover may be cured such that the cover is bonded to the case.

According to an embodiment, the case may include a thermosetting material or a shrinkable tube.

As described above, a magnetic force member (e.g., the magnetic force member 40 in FIG. 4) according to an embodiment may include a first magnet, a second magnet, a third magnet disposed between the first magnet and the second magnet, a case including a recessed groove, and a cover coupled to the case, wherein the magnetic force member may be manufactured by processing the case, inserting the first magnet, the second magnet, and the third magnet in a non-magnetization state into the recessed groove in an array such that the first magnet is disposed such that the magnetic force of the first magnet is oriented in a first direction, the second magnet is disposed such that the magnetic force of the second magnet is oriented in a second direction different from the first direction, and the third magnet is disposed between the first magnet and the second magnet, coupling the case and the cover so that the inserted magnets are surrounded and fixed by the case and the cover, and magnetizing the third magnet so that the magnetic force of the third magnet is formed in a third direction different from the first direction and the second direction.

As described above, a foldable electronic device (e.g., the electronic device 10 in FIG. 1) according to an embodiment may include a hinge structure, a first housing connected to the hinge structure, a second housing connected to the hinge structure and configured to rotate around the hinge structure so as to face one surface of the first housing, and a magnetic force member disposed in at least one of the first housing or the second housing, wherein the magnetic force member may include a first magnet disposed such that the magnetic force thereof is oriented in a first direction, a second magnet disposed such that the magnetic force thereof is oriented in a second direction different from the first direction, a third magnet, of which the magnetic force is oriented in a third direction different from the first direction and the second direction, and which is disposed between the first magnet and the second magnet, a case including a recessed groove, and a cover coupled to the case, and the magnets may be accommodated in the recessed groove and surrounded and fixed by the case and the cover.

According to an embodiment, the second magnet may be disposed such that the second direction is oriented in a direction opposite to the first direction, and the third magnet may be disposed such that the third direction is oriented to be perpendicular to the first direction and the second direction.

According to an embodiment, the magnetic force member may further include a fourth magnet disposed to be oriented in a fourth direction different from the first direction, the second direction, and the third direction, and the second magnet may be disposed between the third magnet and the fourth magnet.

According to an embodiment, wherein the second magnet may be disposed such that the second direction is oriented in a direction opposite to the first direction, and the third magnet and the fourth magnet may be arranged such that the third direction and the fourth direction are oriented in a direction perpendicular to the first direction.

According to an embodiment, the fourth magnet may be disposed such that the fourth direction is oriented in a direction opposite to the third direction.

According to an embodiment, the fourth magnet may be disposed such that the fourth direction is oriented to be perpendicular to the first direction and the third direction.

According to an embodiment, the cover may include a semi-curable material.

According to an embodiment, the case may include a thermosetting material or a shrinkable tube.

## Claims

1. A method of manufacturing a magnetic force member (40) for a foldable electronic device, comprising:
processing a case (402) comprising a recessed groove (402a);
inserting a first magnet (400a), a second magnet (400c), and a third magnet (400b) in a non-magnetization state into the recessed groove (402a) in an array such that the first magnet (400a) is disposed such that the magnetic force of the first magnet (400a) is oriented in a first direction (401a), the second magnet (400c) is disposed such that the magnetic force of the second magnet (400c) is oriented in a second direction (401c) different from the first direction (401a), and the third magnet (400b) is disposed between the first magnet (400a) and the second magnet (400c);
coupling the case (402) and a cover (403) so that the inserted magnets (400a, 400b, 400c) are surrounded and fixed by the case (402) and the cover (403); and
magnetizing the third magnet (400b) so that the magnetic force of the third magnet (400b) is formed in a third direction (401b) different from the first direction (401a) and the second direction (401c).

2. The method of claim 1, wherein the inserting of the magnets (400a, 400b, 400c) into the recessed groove (402a) in the array comprises arranging the second magnet (400c) so that the second direction (401c) is oriented in a direction opposite to the first direction (401a), and
the magnetizing of the third magnet (400b) comprises magnetizing the third magnet (400b) so that the magnetic force thereof is formed in the third direction (401b) perpendicular to the first direction (401a) and the second direction (401c).

3. The method of claim 1 or 2, wherein the inserting of the magnets (400a, 400b, 400c) into the recessed groove (402a) comprises arranging a fourth magnet (400d) in a non-magnetization state so that the fourth magnet (400d) faces the second magnet (400c), and the second magnet (400c) is disposed between the third magnet (400b) and the fourth magnet (400d), and
the magnetizing comprises magnetizing the fourth magnet (400d) so that the magnetic force of the fourth magnet (400d) is formed in a fourth direction (401d) different from the first direction (401a), the second direction (401c), and the third direction (401b).

4. The method of claim 3, wherein the first direction (401a) and the second direction (401c) are opposite to each other, and
the magnetizing of the third magnet (400b) and the fourth magnet (400d) comprises magnetizing the third magnet (400b) and the fourth magnet (400d) to have magnetic forces such that the third direction (401b) and the fourth direction (401d) are perpendicular to the first direction (401a).

5. The method of claim 3 or 4, wherein the third direction (401b) and the fourth direction (401d) are opposite to each other.

6. The method of claim 4, wherein the magnetizing of the third magnet (400b) and the fourth magnet (400d) comprises magnetizing the third magnet (400b) and the fourth magnet (400d) so that the magnetic force of the fourth magnet (400d) is formed in the fourth direction (401d) perpendicular to the first direction (401a) and the third direction (401b).

7. The method of one of claims 3 to 6, wherein the third magnet (400b) and the fourth magnet (400d) are simultaneously magnetized using a multi-pole magnetization yoke (700b) configured to have at least two magnetic forces biased in directions different from each other.

8. The method of one of the claims 1 to 7, further comprising processing the outer shape of the magnetic force member (40) to which the case (402) and the cover (403) are coupled.

9. The method of one of claims 1 to 8, wherein the cover (403) comprises a semi-curable material, and
the coupling of the case (402) and the cover (403) comprises curing the cover (403) so that the cover (403) is bonded to the case (402).

10. A foldable electronic device (10) comprising:
a hinge structure;
a first housing (510) connected to the hinge structure;
a second housing (520) connected to the hinge structure and configured to rotate around the hinge structure so as to face one surface of the first housing (510); and
a magnetic force member (40) disposed in at least one of the first housing (510) or the second housing (520),
wherein the magnetic force member (40) comprises:
a first magnet (400a) disposed such that the magnetic force thereof is oriented in a first direction (401a);
a second magnet (400c) disposed such that the magnetic force thereof is oriented in a second direction (401c) different from the first direction (401a);
a third magnet (400b), of which the magnetic force is oriented in a third direction (401b) different from the first direction (401a) and the second direction (401c), and which is disposed between the first magnet (400a) and the second magnet (400c);
a case (402) comprising a recessed groove (402a); and
a cover (403) coupled to the case (402), and
wherein the magnets (400a, 400b, 400c) are accommodated in the recessed groove (402a), and surrounded and fixed by the case (402) and the cover (403),
wherein the magnetic force member (40) further comprises a fourth magnet (400d) disposed such that the magnetic force of the fourth magnet (400d) is oriented in a fourth direction (401d) perpendicular to the first direction (401a) and perpendicular to the third direction (401b), wherein the second direction (401c) is oriented in a direction opposite to the first direction (401a), and the third direction (401b) is oriented in a direction perpendicular to the first direction (401a), and wherein
the second magnet (400c) is disposed between the third magnet (400b) and the fourth magnet (400d).

## Patentansprüche

1. Verfahren zur Herstellung eines Magnetkraftelements (40) für eine faltbare elektronische Vorrichtung, umfassend:
Bearbeiten eines Gehäuses (402), das eine vertiefte Nut (402a) aufweist;
Einsetzen eines ersten Magneten (400a), eines zweiten Magneten (400c) und eines dritten Magneten (400b) in einem Nichtmagnetisierungszustand in die vertiefte Nut (402a) in einem Array, derart, dass der erste Magnet (400a) so angeordnet ist, dass die Magnetkraft des ersten Magneten (400a) in einer ersten Richtung (401a) ausgerichtet ist, der zweite Magnet (400c) so angeordnet ist, dass die Magnetkraft des zweiten Magneten (400c) in einer zweiten Richtung (401c) ausgerichtet ist, die sich von der ersten Richtung (401a) unterscheidet, und der dritte Magnet (400b) zwischen dem ersten Magneten (400a) und dem zweiten Magneten (400c) angeordnet ist;
Koppeln des Gehäuses (402) und einer Abdeckung (403), so dass die eingesetzten Magnete (400a, 400b, 400c) von dem Gehäuse (402) und der Abdeckung (403) umschlossen und fixiert werden; und
Magnetisieren des dritten Magneten (400b), so dass sich die Magnetkraft des dritten Magneten (400b) in einer dritten Richtung (401b) bildet, die sich von der ersten Richtung (401a) und der zweiten Richtung (401c) unterscheidet.

2. Verfahren nach Anspruch 1, wobei das Einsetzen der Magnete (400a, 400b, 400c) in die vertiefte Nut (402a) in dem Array das Anordnen des zweiten Magneten (400c) umfasst, so dass die zweite Richtung (401c) in einer Richtung entgegengesetzt zur ersten Richtung (401a) ausgerichtet ist, und
das Magnetisieren des dritten Magneten (400b) das Magnetisieren des dritten Magneten (400b) umfasst, so dass sich dessen Magnetkraft in der dritten Richtung (401b) senkrecht zur ersten Richtung (401a) und zur zweiten Richtung (401c) bildet.

3. Verfahren nach Anspruch 1 oder 2, wobei das Einsetzen der Magnete (400a, 400b, 400c) in die vertiefte Nut (402a) das Anordnen eines vierten Magneten (400d) in einem Nichtmagnetisierungszustand umfasst, so dass der vierte Magnet (400d) dem zweiten Magneten (400c) zugewandt ist und der zweite Magnet (400c) zwischen dem dritten Magnet (400b) und dem vierten Magnet (400d) angeordnet ist, und
das Magnetisieren das Magnetisieren des vierten Magneten (400d) umfasst, so dass sich die Magnetkraft des vierten Magneten (400d) in einer vierten Richtung (401d) bildet, die sich von der ersten Richtung (401a), der zweiten Richtung (401c) und der dritten Richtung (401b) unterscheidet.

4. Verfahren nach Anspruch 3, wobei die erste Richtung (401a) und die zweite Richtung (401c) einander entgegengesetzt sind, und
das Magnetisieren des dritten Magneten (400b) und des vierten Magneten (400d) das Magnetisieren des dritten Magneten (400b) und des vierten Magneten (400d) umfasst, damit diese Magnetkräfte aufweisen, so dass die dritte Richtung (401b) und die vierte Richtung (401d) senkrecht zur ersten Richtung (401a) stehen.

5. Verfahren nach Anspruch 3 oder 4, wobei die dritte Richtung (401b) und die vierte Richtung (401d) einander entgegengesetzt sind.

6. Verfahren nach Anspruch 4, wobei das Magnetisieren des dritten Magneten (400b) und des vierten Magneten (400d) das Magnetisieren des dritten Magneten (400b) und des vierten Magneten (400d) umfasst, so dass sich die Magnetkraft des vierten Magneten (400d) in der vierten Richtung (401d) senkrecht zur ersten Richtung (401a) und zur dritten Richtung (401b) bildet.

7. Verfahren nach einem der Ansprüche 3 bis 6, wobei der dritte Magnet (400b) und der vierte Magnet (400d) gleichzeitig unter Verwendung eines mehrpoligen Magnetisierungsjochs (700b) magnetisiert werden, das so konfiguriert ist, dass es mindestens zwei Magnetkräfte aufweist, die in voneinander verschiedenen Richtungen vorgespannt sind.

8. Verfahren nach einem der Ansprüche 1 bis 7, umfassend ferner das Bearbeiten der Außenform des Magnetkraftelements (40), an das das Gehäuse (402) und die Abdeckung (403) gekoppelt sind.

9. Verfahren nach einem der Ansprüche 1 bis 8, wobei die Abdeckung (403) ein halbhärtbares Material umfasst und
das Koppeln des Gehäuses (402) und der Abdeckung (403) das Aushärten der Abdeckung (403) umfasst, so dass die Abdeckung (403) an das Gehäuse (402) gebunden wird.

10. Faltbare elektronische Vorrichtung (10), umfassend:
eine Scharnierstruktur;
ein erstes Gehäuse (510), das mit der Scharnierstruktur verbunden ist;
ein zweites Gehäuse (520), das mit der Scharnierstruktur verbunden und so konfiguriert ist, dass es sich um die Scharnierstruktur dreht, um einer Oberfläche des ersten Gehäuses (510) zuzuwenden, und
ein Magnetkraftelement (40), das in mindestens einem von dem ersten Gehäuse (510) und dem zweiten Gehäuse (520) angeordnet ist,
wobei das Magnetkraftelement (40) Folgendes umfasst:
einen ersten Magneten (400a), der so angeordnet ist, dass seine Magnetkraft in einer ersten Richtung (401a) ausgerichtet ist;
einen zweiten Magneten (400c), der so angeordnet ist, dass seine Magnetkraft in einer zweiten Richtung (401c) ausgerichtet ist, die sich von der ersten Richtung (401a) unterscheidet;
einen dritten Magneten (400b), dessen Magnetkraft in einer dritten Richtung (401b) ausgerichtet ist, die sich von der ersten Richtung (401a) und der zweiten Richtung (401c) unterscheidet, und der zwischen dem ersten Magneten (400a) und dem zweiten Magneten (400c) angeordnet ist;
ein Gehäuse (402), das eine vertiefte Nut (402a) umfasst; und
eine mit dem Gehäuse (402) gekoppelte Abdeckung (403), und
wobei die Magnete (400a, 400b, 400c) in der vertieften Nut (402a) aufgenommen und von dem Gehäuse (402) und der Abdeckung (403) umgeben und fixiert sind,
wobei das Magnetkraftelement (40) ferner einen vierten Magneten (400d) umfasst, der so angeordnet ist, dass die Magnetkraft des vierten Magneten (400d) in einer vierten Richtung (401d) ausgerichtet ist, die senkrecht zur ersten Richtung (401a) und senkrecht zur dritten Richtung (401b) verläuft, wobei die zweite Richtung (401c) in einer zur ersten Richtung (401a) entgegengesetzten Richtung und die dritte Richtung (401b) in einer zur ersten Richtung (401a) senkrechten Richtung ausgerichtet ist, und wobei
der zweite Magnet (400c) zwischen dem dritten Magneten (400b) und dem vierten Magneten (400d) angeordnet ist.

## Revendications

1. Procédé de fabrication d'un élément de force magnétique (40) destiné à un dispositif électronique pliable, comprenant :
traiter un boîtier (402) comprenant une rainure en retrait (402a) ;
insérer un premier aimant (400a), un deuxième aimant (400c) et un troisième aimant (400b) à l'état non magnétisé dans la rainure en retrait (402a) selon une disposition en réseau, de sorte que le premier aimant (400a) est disposé de manière que sa force magnétique soit orientée dans une première direction (401a), que le deuxième aimant (400c) est disposé de manière que sa force magnétique soit orientée dans une deuxième direction (401c) différente de la première direction (401a), et que le troisième aimant (400b) est disposé entre le premier aimant (400a) et le deuxième aimant (400c) ;
assembler le boîtier (402) et un couvercle (403) de sorte que les aimants insérés (400a, 400b, 400c) soient entourés et fixés par le boîtier (402) et le couvercle (403) ; et
magnétiser le troisième aimant (400b) de sorte que la force magnétique du troisième aimant (400b) soit formée dans une troisième direction (401b) différente de la première direction (401a) et de la deuxième direction (401c).

2. Procédé selon la revendication 1, dans lequel l'insertion des aimants (400a, 400b, 400c) dans la rainure en retrait (402a) selon la disposition en réseau comprend le fait de disposer le deuxième aimant (400c) de sorte que la deuxième direction (401c) soit orientée dans une direction opposée à la première direction (401a), et
dans lequel la magnétisation du troisième aimant (400b) comprend la magnétisation du troisième aimant (400b) de sorte que sa force magnétique soit formée dans la troisième direction (401b) perpendiculaire à la première direction (401a) et à la deuxième direction (401c).

3. Procédé selon la revendication 1 ou 2, dans lequel l'insertion des aimants (400a, 400b, 400c) dans la rainure en retrait (402a) comprend le fait de disposer un quatrième aimant (400d) à l'état non magnétisé de sorte que le quatrième aimant (400d) soit en regard du deuxième aimant (400c), et dans lequel le deuxième aimant (400c) est disposé entre le troisième aimant (400b) et le quatrième aimant (400d), et
dans lequel la magnétisation comprend la magnétisation du quatrième aimant (400d) de sorte que la force magnétique du quatrième aimant (400d) soit formée dans une quatrième direction (401d) différente de la première direction (401a), de la deuxième direction (401c) et de la troisième direction (401b).

4. Procédé selon la revendication 3, dans lequel la première direction (401a) et la deuxième direction (401c) sont opposées l'une à l'autre, et
dans lequel la magnétisation du troisième aimant (400b) et du quatrième aimant (400d) comprend la magnétisation du troisième aimant (400b) et du quatrième aimant (400d) de sorte que leurs forces magnétiques soient telles que la troisième direction (401b) et la quatrième direction (401d) soient perpendiculaires à la première direction (401a).

5. Procédé selon la revendication 3 ou 4, dans lequel la troisième direction (401b) et la quatrième direction (401d) sont opposées l'une à l'autre.

6. Procédé selon la revendication 4, dans lequel la magnétisation du troisième aimant (400b) et du quatrième aimant (400d) comprend la magnétisation du troisième aimant (400b) et du quatrième aimant (400d) de sorte que la force magnétique du quatrième aimant (400d) soit formée dans la quatrième direction (401d) perpendiculaire à la première direction (401a) et à la troisième direction (401b).

7. Procédé selon l'une quelconque des revendications 3 à 6, dans lequel le troisième aimant (400b) et le quatrième aimant (400d) sont magnétisés simultanément au moyen d'un joug de magnétisation multipolaire (700b) configuré pour présenter au moins deux forces magnétiques orientées dans des directions différentes.

8. Procédé selon l'une quelconque des revendications 1 à 7, comprenant en outre le traitement de la forme extérieure de l'élément de force magnétique (40) auquel le boîtier (402) et le couvercle (403) sont assemblés.

9. Procédé selon l'une quelconque des revendications 1 à 8, dans lequel le couvercle (403) comprend un matériau semi-curable, et
dans lequel l'assemblage du boîtier (402) et du couvercle (403) comprend la polymérisation du couvercle (403) de sorte que le couvercle (403) soit lié au boîtier (402).

10. Dispositif électronique pliable (10) comprenant :
une structure de charnière ;
un premier boîtier (510) relié à la structure de charnière;
un second boîtier (520) relié à la structure de charnière et configuré pour pivoter autour de la structure de charnière de manière à faire face à une surface du premier boîtier (510) ; et
un élément de force magnétique (40) disposé dans au moins l'un du premier boîtier (510) ou du second boîtier (520),
dans lequel l'élément de force magnétique (40) comprend :
un premier aimant (400a) disposé de sorte que sa force magnétique soit orientée dans une première direction (401a) ;
un deuxième aimant (400c) disposé de sorte que sa force magnétique soit orientée dans une deuxième direction (401c) différente de la première direction (401a) ;
un troisième aimant (400b), dont la force magnétique est orientée dans une troisième direction (401b) différente de la première direction (401a) et de la deuxième direction (401c), et qui est disposé entre le premier aimant (400a) et le deuxième aimant (400c) ;
un boîtier (402) comprenant une rainure en retrait (402a) ; et
un couvercle (403) assemblé au boîtier (402), et
dans lequel les aimants (400a, 400b, 400c) sont logés dans la rainure en retrait (402a) et entourés et fixés par le boîtier (402) et le couvercle (403),
dans lequel l'élément de force magnétique (40) comprend en outre un quatrième aimant (400d) disposé de sorte que sa force magnétique soit orientée dans une quatrième direction (401d) perpendiculaire à la première direction (401a) et perpendiculaire à la troisième direction (401b), dans lequel la deuxième direction (401c) est orientée dans une direction opposée à la première direction (401a), et la troisième direction (401b) est orientée dans une direction perpendiculaire à la première direction (401a), et dans lequel
le deuxième aimant (400c) est disposé entre le troisième aimant (400b) et le quatrième aimant (400d).
